# FASCICULE DE BREVET EUROPEEN

(11) **EP 1 842 719 B1**
(45) Date de publication et mention de la délivrance du brevet: **22.05.2013**
(21) Numéro de dépôt: 07290426.1
(22) Date de dépôt: 06.04.2007
(51) Int. Cl.: B60P 3/22, B65D 90/34

(54) **Dispositif de mise à l'air d'une citerne comprenant un bouchon actionné manuellement**
Vorrichtung zur Entlüftung einer Zisterne, die einen von Hand bedienten Verschlussstopfen umfasst
Device for venting a cistern comprising a manually activated plug

(30) Priorité: 07.04.2006 FR 0651256
(43) Date de publication de la demande: 10.10.2007
(73) Titulaire: Etablissements MAGYAR, 21000 Dijon (FR)
(72) Inventeur: Magyar, Georges, 21000 Dijon (FR)
(74) Mandataire: Novagraaf Technologies

(56) Documents cités:
- DE-U1- 9 318 785
- FR-A1- 2 850 958
- US-A- 5 404 903

## Description

L'invention concerne un dispositif de mise à l'air libre pour une citerne selon le préambule de la revendication 1, notamment par une citerne de camion, de semi-remorque ou de remorque. l'invention concerne aussi une citerne équipée d'un tel dispositif.

De tels dispositifs de mise à l'air libre sont connus dans l'art antérieur. Ils comprennent généralement une extrémité proximale destinée à être reliée avec l'intérieur de la citerne et une extrémité distale à l'air libre ainsi qu'un bouchon étanche, à son extrémité distale, mobile entre une position de fermeture et une position d'ouverture. Le document FR-2 850 958 décrit par exemple un tel dispositif.

Cependant, l'ouverture et la fermeture du bouchon sont commandées au moyen d'un vérin monté à proximité du bouchon. Le bouchon étant situé dans la partie supérieure de la citerne, il est alors nécessaire de monter sur cette citerne si l'on veut s'assurer que le bouchon est bien ouvert. En effet, l'utilisation du vérin ne permet d'informer l'utilisateur de l'ouverture ou de la fermeture du bouchon sans que celui-ci ne monte sur la citerne.

L'invention vise à pallier cet inconvénient en proposant un dispositif de mise à l'air libre pour une citerne comprenant un bouchon dont l'ouverture et la fermeture sont commandées par un élément d'actionnement manuel situé à distance du bouchon de sorte à être accessible sans monter sur la citerne.

A cet effet et selon un premier aspect, l'invention concerne un dispositif de mise à l'air libre pour une citerne, du type comportant au moins une extrémité proximale destinée à être reliée avec l'intérieur de ladite citerne et une extrémité distale à l'air libre, ledit dispositif comprenant en outre à son extrémité distale un bouchon étanche mobile entre une position de fermeture et une position d'ouverture, ledit bouchon étant monté sur un levier mobile en rotation, le levier étant entraîné en rotation par une tige solidaire d'un élément d'actionnement manuel, ledit élément d'actionnement manuel étant monté en rotation sur le châssis de la citerne entre une position de fermeture correspondant à la position de fermeture du bouchon et une position d'ouverture, dans laquelle la rotation de l'élément d'actionnement manuel entraîne la rotation du levier de sorte à placer le bouchon dans sa position d'ouverture.

Ainsi, la position de l'élément d'actionnement permet d'obtenir une information sur la fermeture ou l'ouverture du bouchon sans avoir à monter sur la citerne.

Selon une réalisation, l'élément d'actionnement manuel est disposé dans un logement prévu dans le châssis de la citerne, ledit logement étant muni d'une porte mobile en rotation entre une position de fermeture, dans laquelle la porte obture le logement, et une position d'ouverture, dans laquelle le logement est accessible depuis l'extérieur de la citerne, l'élément d'actionnement manuel étant associé à ladite porte de sorte qu'en position de fermeture de la porte, l'élément d'actionnement est en position de fermeture et qu'en position d'ouverture de la porte, l'élément d'actionnement est en position d'ouverture.

Ainsi, lorsque la porte est ouverte, l'utilisateur de la citerne est assuré que le bouchon est ouvert. Le logement recevant également des moyens de remplissage, de vidange et de nettoyage de la citerne, on s'assure que le bouchon sera bien ouvert lors des opérations de remplissage, vidange et nettoyage de la citerne et fermé en dehors de ces opérations. De plus, lorsque le logement est fermé, on s'assure que le bouchon est également fermé, ce qui permet un transport de produits liquides sans perte de ceux-ci.

Selon une réalisation, la tige est pourvue de moyens de compression de sorte que le levier puisse comprimer la tige en cas de surpression à l'intérieur de la citerne. On évite ainsi les phénomènes de surpression à l'intérieur de la citerne en permettant à l'air de s'échapper malgré la position de fermeture du bouchon en cas de surpression.

Selon un deuxième aspect, l'invention concerne une citerne équipée d'un dispositif de mise à l'air tel que décrit ci-dessus, l'extrémité proximale dudit dispositif débouchant dans l'enceinte de ladite citerne.

D'autres aspects et avantages de l'invention apparaîtront au cours de la description qui suit, faite en référence aux figures annexées.

La figure 1 est une représentation schématique partielle en coupe d'une citerne pourvue d'un dispositif de mise à l'air selon l'invention, le bouchon étant en position fermée.

La figure 2 est une représentation schématique partielle en coupe d'une partie du dispositif de mise à l'air associé au châssis de la citerne, l'élément d'actionnement étant en position d'ouverture.

La figure 3 est une représentation schématique en perspective de l'élément d'actionnement du dispositif de mise à l'air, ledit dispositif étant associé au châssis de la citerne et étant en position d'ouverture.

La figure 4 est une représentation schématique partielle en coupe du dispositif de mise à l'air, le bouchon étant en position de fermeture.

En référence aux figures, on décrit un dispositif de mise à l'air libre 1 monté sur une citerne 2, et notamment une citerne de camion, de semi-remorque ou de remorque pour le transport de produits liquides ou semi-liquides.

Ce dispositif 1 est par exemple positionné à l'extrémité supérieure arrière de la citerne 2. Le dispositif 1 est placé à l'intérieur d'un logement 8 s'étendant à partir d'une paroi arrière interne 7 de la citerne 2. Dans la description, le terme « intérieur de la citerne » se réfère à l'enceinte destinée à recevoir le produit liquide ou semi-liquide à transporter, la paroi interne 7 définissant une paroi de cette enceinte.

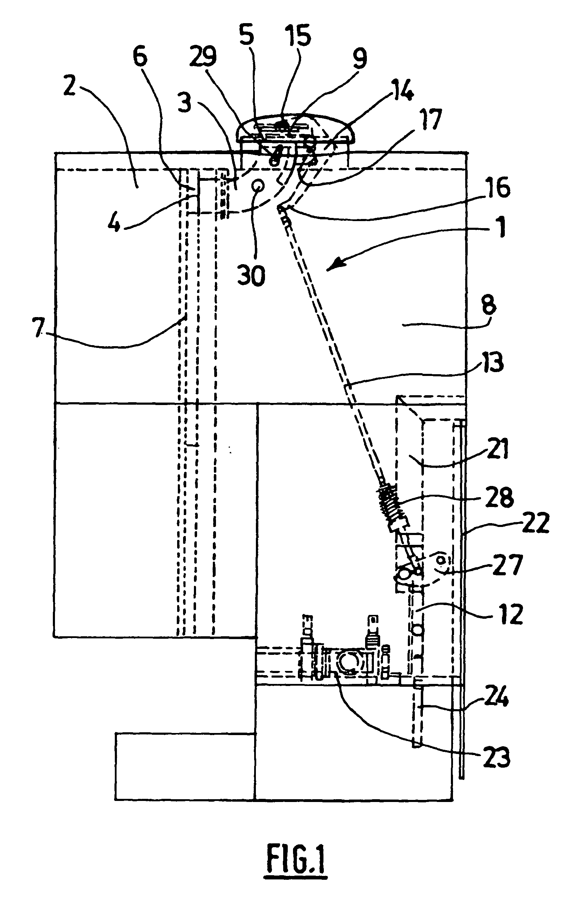

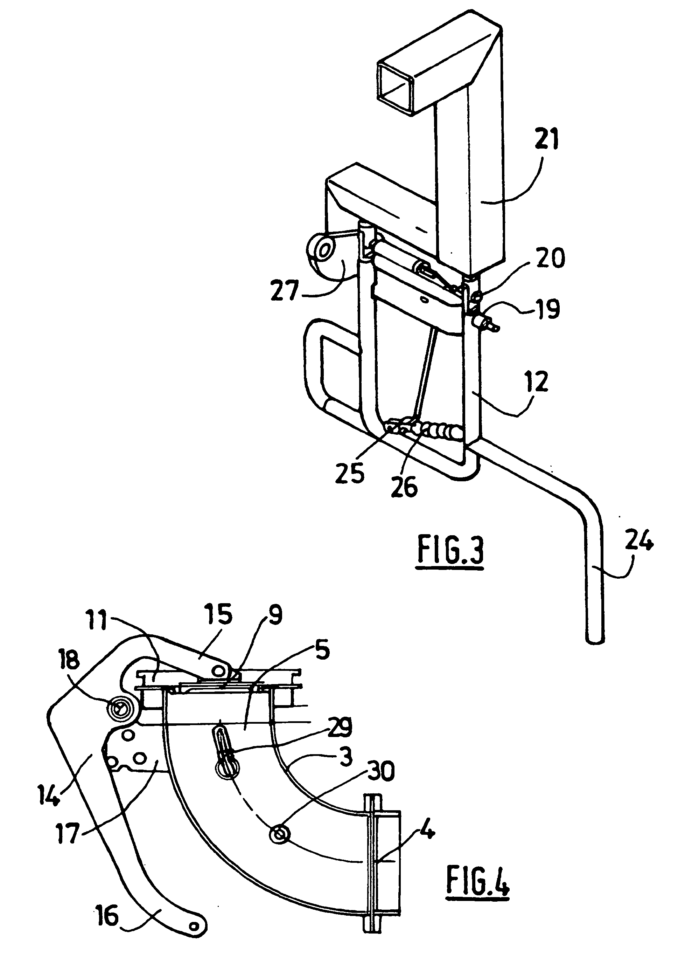

Le dispositif 1 est constitué d'un tube 3 de section circulaire et coudé dont les extrémités libres forment respectivement une extrémité proximale 4 et une extrémité distale 5. Selon la réalisation représentée sur les figures 1 et 4, l'extrémité distale 5 est orientée sensiblement perpendiculairement à l'extrémité proximale 4. Selon une réalisation non représentée, le tube 3 peut être formé de deux portions de tubes cylindriques soudés l'un à l'autre et coupés en biseau à angle droit.

L'extrémité proximale 4 est reliée avec l'intérieur de la citerne 2. A cet effet, le tube 3 est par exemple soudé autour d'un orifice 6 prévu dans la paroi interne 7 de la citerne.

Le dispositif 1 comprend à son extrémité distale 5 un bouchon 9 mobile entre une position de fermeture, dans laquelle il obture le tube 3 en fermant hermétiquement l'extrémité distale, et une position d'ouverture, dans laquelle le tube 3 n'est pas obturé et dans laquelle l'air peut circuler entre l'intérieur de la citerne 2 et l'extérieur. Le bouchon 9 peut être équipé d'un joint reposant sur la périphérie de l'extrémité distale 5 en position de fermeture.

Un bac à égoutture 10 peut être positionné à l'extrémité supérieure du tube 3, coaxialement avec l'extrémité distale 5 du tube, afin de permettre de récupérer les fluides s'échappant éventuellement par l'extrémité distale 5.

Le mouvement du bouchon 9 est commandé au moyen d'un élément d'actionnement manuel 12 relié au bouchon 9 par l'intermédiaire d'une tige 13 et d'un levier 14.

Le levier 14 présente une extrémité 15 pourvue d'un orifice de passage d'un moyen de fixation solidaire du bouchon 9 et une autre extrémité 16 pourvue d'un orifice de passage d'un moyen de fixation solidaire de la tige 13. Le levier 14 présente par exemple sensiblement une forme de L et est monté en rotation sur une plaque 17 solidaire du tube 3 autour d'un axe 18. Le mouvement de rotation du levier 14 autour de l'axe 18 est agencé pour permettre le passage du bouchon 9 de sa position de fermeture à sa position d'ouverture et inversement.

La tige 13 est fixée à l'une de ses extrémités à l'extrémité 16 du levier 14 et à son autre extrémité à un plot de fixation 19 de l'élément d'actionnement 12. L'élément d'actionnement manuel 12 est monté en rotation autour d'un axe 20 sur une pièce 21 du châssis de la citerne. La pièce 21 est par exemple soudée à la citerne à l'intérieur du logement 8, comme représenté sur la figure 1. L'élément d'actionnement 12 est mobile entre une position de fermeture correspondant à la position de fermeture du bouchon 9 et une position d'ouverture correspondant à la position d'ouverture du bouchon 9. Lors du passage de l'élément d'actionnement 12 de sa position de fermeture à sa position d'ouverture, le mouvement de rotation de cet élément entraîne la rotation de la tige 13 qui elle-même entraîne la rotation du levier 14 de sorte à faire passer le bouchon 9 de sa position de fermeture à sa position d'ouverture.

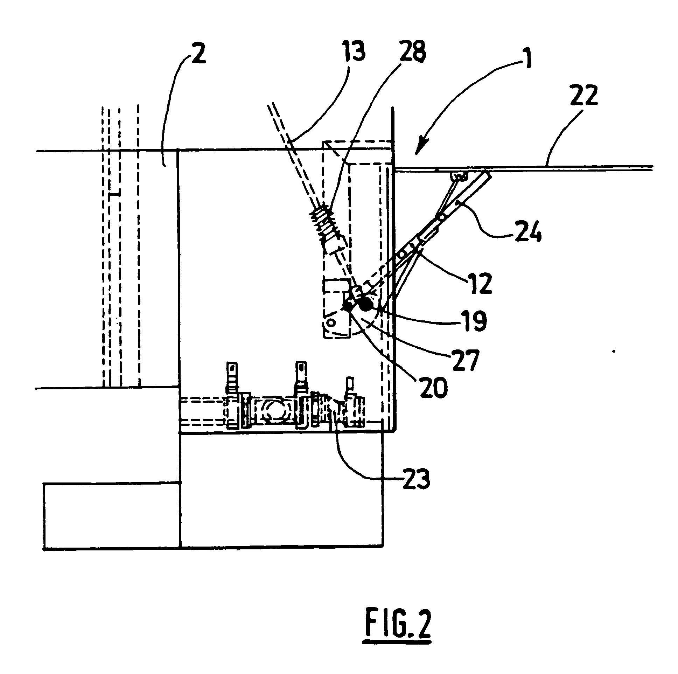

L'élément d'actionnement manuel 12 est disposé dans la partie inférieure du logement 8 en regard d'une porte 22 permettant de fermer ce logement 8. La porte 22 est mobile en rotation entre une position de fermeture, dans laquelle la porte obture le logement, et une position d'ouverture, dans laquelle le logement est accessible depuis l'extérieur de la citerne. En position d'ouverture, l'élément d'actionnement 12 fait saillie en dehors du logement 8, comme représenté sur la figure 2. On s'assure ainsi que le bouchon 9 ne peut être ouvert par l'intermédiaire de l'actionnement de l'élément d'actionnement 12 que si la porte 22 est ouverte.

Selon une réalisation, on peut prévoir que l'élément d'actionnement manuel 12 soit associé à la porte 22 de sorte qu'en position de fermeture de la porte 22, l'élément d'actionnement 12 soit en position de fermeture et qu'en position d'ouverture de la porte 22, l'élément d'actionnement 12 soit en position d'ouverture. Ainsi selon cette réalisation, l'ouverture de la porte 22 déclenche l'ouverture du bouchon 9. La porte 22 peut également permettre l'accès à des moyens 23 de vidange, de remplissage et de nettoyage de la citerne. Ainsi, lorsque des opérations de vidange, de remplissage ou de nettoyage de la citerne ont lieu, l'opérateur ouvre la porte 22 et dans le même temps ouvre le bouchon 9, ce qui assure une mise à l'air de la citerne lors de ces opérations.

L'élément d'actionnement 12 est pourvu d'un moyen de préhension 24 permettant son actionnement manuel par un utilisateur.

L'élément d'actionnement 12 peut en outre comprendre des moyens de blocage 25 de l'élément d'actionnement 12 dans sa position d'ouverture. Ces moyens comprennent par exemple une poignée 26 actionnable pour mettre en appui un organe 27 contre la pièce 21 du châssis et pour bloquer la rotation de l'élément d'actionnement 12.

La tige 13 peut être pourvue de moyens de compression 28 de sorte que le levier 14 puisse comprimer la tige 13 en cas de surpression à l'intérieur de la citerne. Les moyens de compression comprennent par exemple un ressort permettant d'écraser une partie de la tige 13 sur elle-même. Ainsi, en cas de surpression à l'intérieur de la citerne 2, le bouchon 9 exerce une pression sur le levier 14 qui, à son tour, comprime la tige 13, ce qui permet au bouchon de s'ouvrir légèrement et de supprimer la surpression. Selon une réalisation, les moyens de compression 28 sont agencés pour se comprimer dès que la pression au niveau du bouchon est supérieure à environ 0,3 bar.

Le dispositif 1 comprend en outre à l'intérieur du tube 3, un système de nettoyage interne à l'aide d'une boule de projection 29 disposée dans le tube 3. Le système de nettoyage est amovible, afin de permettre de le changer, au besoin, sans avoir à désassembler le dispositif 1 de la citerne 2. Il est possible de raccorder un embout de la boule de projection 29 à un système de distribution de liquide de nettoyage, afin de projeter du liquide de nettoyage sur la face interne du tube 3, pour le nettoyer. Ce liquide s'écoule ensuite par l'extrémité proximale 4 dans la citerne et est évacué avec le liquide qui sert au nettoyage de l'intérieur de la citerne 2.

Le dispositif 1 comporte en outre, à l'intérieur du tube 3, une onde de détection de niveau 30. Cette sonde est amovible afin de permettre de la changer au besoin sans avoir à démonter le dispositif 1 de la citerne. Cette sonde 30 est reliée avec le système d'aspiration des fluides dans la citerne et permet, lorsque le niveau de fluide atteint une valeur souhaitée, de couper automatiquement l'aspiration des fluides, afin que la citerne 2 ne déborde pas.

## Revendications

1. Dispositif de mise à l'air libre pour une citerne (2), du type comportant au moins une extrémité proximale (4) destinée à être reliée avec l'intérieur de ladite citerne et une extrémité distale (5) à l'air libre, ledit dispositif comprenant en outre à son extrémité distale (5) un bouchon (9) étanche mobile entre une position de fermeture et une position d'ouverture, ledit bouchon étant monté sur un levier (14) mobile en rotation, ledit dispositif étant **caractérisé en ce que** le levier (14) est entraîné en rotation par une tige (13) solidaire d'un élément d'actionnement manuel (12), ledit élément d'actionnement manuel étant destiné à être monté en rotation sur le châssis de la citerne (2) entre une position de fermeture correspondant à la position de fermeture du bouchon (9) et une position d'ouverture, dans laquelle la rotation de l'élément d'actionnement manuel (12) entraîne la rotation du levier (14) de sorte à placer le bouchon (9) dans sa position d'ouverture.

2. Dispositif selon la revendication 1, **caractérisé en ce que** l'élément d'actionnement manuel (12) est destiné à être disposé dans un logement (8) prévu dans le châssis de la citerne (2), ledit logement étant muni d'une porte (22) mobile en rotation entre une position de fermeture, dans laquelle la porte (22) obture le logement (8), et une position d'ouverture, dans laquelle le logement (8) est accessible depuis l'extérieur de la citerne, l'élément d'actionnement manuel (12) étant destiné à être associé à ladite porte de sorte qu'en position de fermeture de la porte (22), l'élément d'actionnement (12) est en position de fermeture et qu'en position d'ouverture de la porte (22), l'élément d'actionnement (12) est en position d'ouverture.

3. Dispositif selon la revendication 1 ou 2, **caractérisé en ce qu'**il comprend des moyens de blocage (25) de l'élément d'actionnement (12) en position d'ouverture.

4. Dispositif selon l'une quelconque des revendications 1 à 3, **caractérisé en ce que** la tige (13) est pourvue de moyens de compression (28) de sorte que le levier (14) puisse comprimer la tige (13) en cas de surpression à l'intérieur de la citerne et permettre l'ouverture du bouchon (9).

5. Dispositif selon l'une quelconque des revendications 1 à 4, **caractérisé en ce que** le levier (14) présente sensiblement une forme de L.

6. Dispositif selon l'une quelconque des revendications 1 à 5, **caractérisé en ce que** l'extrémité distale (5) est orientée sensiblement perpendiculairement à l'extrémité proximale (4).

7. Dispositif selon l'une quelconque des revendications 1 à 6, **caractérisé en ce qu'**il comprend à l'intérieur une boule de projection de liquide (29).

8. Dispositif selon l'une quelconque des revendications 1 à 7, **caractérisé en ce qu'**il comprend une sonde de détection de niveau (30).

9. Citerne, **caractérisé en ce qu'**elle est équipée d'un dispositif de mise à l'air (1) selon l'une quelconque des revendications 1 à 8, l'extrémité proximale (4) dudit dispositif débouchant dans l'enceinte de ladite citerne.

## Patentansprüche

1. Vorrichtung zur Entlüftung eines Tanks (2), die derart gestaltet ist, dass sie zumindest ein nahe gelegenes Ende (4) umfasst, das dazu bestimmt ist, mit dem Inneren des besagten Tanks verbunden zu werden, sowie ein entfernteres Ende (5) im Freien, wobei die besagte Vorrichtung an ihrem entfernteren Ende (5) darüber hinaus einen dichten Stopfen (9) umfasst, der zwischen einer geschlossenen Stellung und einer offenen Stellung bewegt werden kann, und der besagte Stopfen auf einem drehbaren Hebel (14) montiert ist, und die besagte Vorrichtung **dadurch gekennzeichnet ist, dass** der Hebel (14) durch eine Stange (13) zum Drehen gebracht wird, die fest mit einem manuellen Antriebselement (12) verbunden ist, und das besagte manuelle Antriebselement dazu bestimmt ist, auf dem Gestell des Tanks (2) zwischen einer geschlossenen Stellung, die der geschlossenen Stellung des Stopfens (9) entspricht, und einer offenen Stellung drehend montiert zu werden, wobei die Drehung des manuellen Antriebselements (12) den Hebel (14) zum Drehen bringt, sodass der Stopfen (9) in die offene Stellung gebracht wird.

2. Vorrichtung nach Anspruch 1, **dadurch gekennzeichnet, dass** das manuelle Antriebselement (12) dazu bestimmt ist, in einem Gehäuse (8) angeordnet zu werden, die im Gestell des Tanks (2) ausgeführt ist, wobei die besagte Aufnahme mit einer Türe (22) versehen ist, die zwischen einer geschlossenen Stellung, in der die Türe (22) das Gehäuse (8) verschließt, und einer offenen Stellung verdreht werden kann, in das Gehäuse (8) von außerhalb des Tanks zugänglich ist, und das manuelle Antriebselement (12) dazu bestimmt ist, der besagten Türe so zugeordnet zu werden, dass sich das manuelle Antriebselement (12) in der geschlossenen Stellung der Türe (22) in der geschlossenen Stellung befindet, und sich das manuelle Antriebselement (12) bei offener Stellung der Türe (22) in der offenen Stellung befindet.

3. Vorrichtung nach Anspruch 1 oder 2, **dadurch gekennzeichnet, dass** sie Vorrichtungen zum Verriegelunsmittel (25) des Antriebselements (12) in der offenen Stellung umfasst.

4. Vorrichtung nach irgendeinem der Ansprüche 1 bis 3, **dadurch gekennzeichnet, dass** die Stange (13) mit Druckbelastungselementen (28) versehen ist, sodass der Hebel (14) die Stange (13) im Falle eines Überdrucks im Inneren des Tanks zusammendrücken kann, um dadurch das Öffnen des Stopfens (9) zu ermöglichen.

5. Vorrichtung nach irgendeinem der Ansprüche 1 bis 4, **dadurch gekennzeichnet, dass** der Hebel (14) in etwa eine L-Form aufweist.

6. Vorrichtung nach irgendeinem der Ansprüche 1 bis 5, **dadurch gekennzeichnet, dass** das entferntere Ende (5) in etwa senkrecht zum nahe gelegenen Ende (4) ausgerichtet ist.

7. Vorrichtung nach irgendeinem der Ansprüche 1 bis 6, **dadurch gekennzeichnet, dass** sie im Inneren eine Kugel zum Verspritzen von Flüssigkeit (29) umfasst.

8. Vorrichtung nach irgendeinem der Ansprüche 1 bis 7, **dadurch gekennzeichnet, dass** sie eine Sonde zum Erfassen des Füllstands (30) umfasst.

9. Tank, **dadurch gekennzeichnet, dass** er mit einer Entlüftungsvorrichtung (1) nach irgendeinem der Ansprüche 1 bis 8 ausgestattet ist, wobei das nahe gelegene Ende (4) der besagten Vorrichtung in den Innenraum des besagten Tanks mündet.

## Claims

1. Device for venting for a tanker (2), of the type comprising at least one proximal end (4) intended to be connected with the interior of said tanker and a distal end (5) to the open air, said device further comprising at its distal end (5) a sealed cap (9) movable between a closed position and an open position, said cap being mounted on a lever (14) mobile in rotation, said device **characterised in that** the lever (14) is driven in rotation by a rod (13) integral with a manual actuating element (12), said manual actuating element being intended to be rotably mounted on the chassis of the tanker (2) between a closed position corresponding to the closed position of the cap (9) and an open position, wherein the rotation of the manual actuating element (12) drives the rotation of the lever (14) in such a way as to place the cap (9) in its open position.

2. Device according to claim 1, **characterised in that** the manual actuating element (12) is intended to be arranged in a housing (8) provided in the chassis of the tanker (2), said housing being provided with a door (22) mobile in rotation between a closed position, wherein the door (22) closes off the housing (8), and an open position, wherein the housing (8) can be accessed from the exterior of the tanker, with the manual actuating element (12) being intended to be associated with said door in such a way that in the closed position of the door (22), the actuating element (12) is in closed position and that in the open position of the door (22), the actuating element (12) is in open position.

3. Device according to claim 1 or 2, **characterised in that** it comprises means for blocking (25) the actuating element (12) in the open position.

4. Device according to any of claims 1 to 3, **characterised in that** the rod (13) is provided with means for compressing (28) in such a way that the lever (14) can compress the rod (13) in the case of excessive pressure inside the tanker and allow for the opening of the cap (9).

5. Device according to any of claims 1 to 4, **characterised in that** the lever (14) substantially has an L shape.

6. Device according to any of claims 1 to 5, **characterised in that** the distal end (5) is directed substantially perpendicularly to the proximal end (4).

7. Device according to any of claims 1 to 6, **characterised in that** it comprises inside a liquid projection ball (29).

8. Device according to any of claims 1 to 7, **characterised in that** it comprises a level detection sensor (30).

9. Tanker, **characterised in that** it is provided with a device for venting (1) according to any of claims 1 to 8, the proximal end (4) of said device leading into the enclosure of said tank.
